# EUROPEAN PATENT APPLICATION

(11) **EP 4 668 358 A1**
(43) Date of publication of application: **24.12.2025**
(21) Application number: 25175706.8
(22) Date of filing: 12.05.2025
(51) Int. Cl.: H01M 4/36, H01M 4/66, H01M 4/70, H01M 4/74

(54) **APPARATUS AND METHOD FOR MANUFACTURING AN ELECTRODE FOR A SECONDARY BATTERY**

(30) Priority: 21.06.2024 KR 20240081133
(71) Applicant: SAMSUNG SDI CO., LTD., Yongin-si, Gyeonggi-do 17084 (KR)
(72) Inventor: KIMURA, Fumiko, 17084 Yongin-si, Gyeonggi-do (KR)
(74) Representative: Gulde & Partner

(57) **Abstract**

Embodiments of the present invention relate to an electrode for a secondary battery, the secondary battery including the electrode, and a method for manufacturing the electrode. The electrode includes a current collector comprising a first surface facing a first direction and a second surface facing a second direction opposite to the first direction, a primer layer placed on one or more of the first surface and the second surface of the current collector, and an active material layer placed on the primer layer. In some embodiments, one or more portions of the current collector with the primer layer formed on one or more of the first and second surfaces thereof are protruded in at least one of the first direction or the second direction to form one or more protrusions.

## Description

### BACKGROUND

### 1. Field

Aspects of embodiments of the present invention relate to an apparatus and method for manufacturing an electrode for a secondary battery.

### 2. Description of the Related Art

Unlike primary batteries that are not designed to be (re)charged, secondary (or rechargeable) batteries are batteries that are designed to be discharged and recharged. Lowcapacity secondary batteries are used in portable, small electronic devices, such as smart phones, feature phones, notebook computers, digital cameras, and camcorders, while largecapacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Generally, the secondary battery is manufactured by forming the electrode assembly by coating an active material onto a surface of a current collector to form the positive electrode and the negative electrode, and interposing a separator between the positive electrode and the negative electrode. The electrode assembly may then be accommodated in the case. The case may have a cylindrical shape, a prismatic shape, a pouch shape, or a coinshape. A liquid electrolyte may then be injected or impregnated into the electrode assembly. A solid electrolyte may also be used instead of a liquid electrolyte. During this process, the positive electrode (or positive electrode plate) is manufactured by applying a slurry containing a positive electrode active material onto a substrate, and the negative electrode (or negative electrode plate) is manufactured by applying a slurry containing a negative electrode active material onto a substrate. For instance, depending on the specific characteristics of the electrode (or electrode plate) required by the secondary battery, the properties of the materials contained within the slurry and the amount of slurry applied to the substrate may vary. In some embodiments, the electrode (or electrode plate) may be manufactured through a dry process that does not involve the application of a solvent-containing slurry. In such a dry process, an active material, a binder, and/or a conductive agent are mixed without a solvent to create a slurry-like mixture, which is then coated (e.g., the slurry-like mixture is prepared in the form of an electrode and then laminated onto a substrate). Compared to a wet process, the dry process can eliminate the need for a drying step.

When applying high-capacity active materials to electrodes for secondary batteries, the inherent properties of these materials can lead to significant expansion and contraction during charging and discharging cycles. This volumetric change during the charging and discharging cycles of the high-capacity active materials may cause structural deformation of the electrode, leading to mixture layer delamination in which multiple mixture layers that constitute the electrode are separated from one or more other. Such delamination can weaken the contact between active material particles and reduce electrical conductivity, resulting in a loss of conductive paths. Furthermore, in high-energy-density electrodes (e.g., thick-film electrodes), the overvoltage in the thickness direction may be large, leading to uneven state of charge between a surface layer and an inner layer of the electrode and performance degradation including reduced lifespan. Therefore, there is a growing need for electrodes for secondary batteries that can reduce the electron transfer resistance across the electrode plate (e.g., the entire electrode plate) and mitigate the unevenness of overvoltage, secondary batteries including such electrodes, and methods for manufacturing the electrodes of the secondary batteries. Thus, it was an object of the present invention to enhance adhesion while reducing the electrical resistance and to improve the adhesion even when applying the negative electrode active material.

The above information disclosed in this Background section is for enhancement of understanding of the background of the present invention, and therefore, it may contain information that does not constitute related (or prior) art.

### SUMMARY

The present invention is set out in the appended set of claims, wherein the drawings and respective description relate to advantageous embodiments thereof.

The present invention is directed to an electrode for a secondary battery, a secondary battery including same, and a method for manufacturing same that are configured to address the above technical problem.

These and other aspects and features of the present invention will be described in or will be apparent from the following description of embodiments of the present invention.

An electrode for a secondary battery according to one or more embodiments of the present invention may include a current collector having a first surface facing a first direction and a second surface facing a second direction opposite to the first direction, a primer layer placed on one or more of the first surface and the second surface of the current collector, and an active material layer placed on the primer layer. Further, one or more portions of the current collector with the primer layer formed on one or more of the first and second surfaces thereof are protruded in at least one of the first direction or the second direction to form one or more protrusions.

According to one or more embodiments of the present invention, the one or more protrusions may include one or more first protrusions formed to protrude in the first direction, and one or more second protrusions formed to protrude in the second direction.

According to one or more embodiments of the present invention, the one or more first protrusions and the one or more second protrusions may be alternately arranged in a direction perpendicular to the first and second directions.

According to one or more embodiments of the present invention, a spacing between one or more of the one or more first protrusions and one or more of the one or more second protrusions, which are alternately arranged, may be within a specified range

According to one or more embodiments of the present invention, one or more of the one or more protrusions may include an opening penetrating the current collector and the primer layer.

According to one or more embodiments of the present invention, the active material layer may include a first active material layer placed on the primer layer, and a second active material layer placed on the first active material layer.

According to one or more embodiments of the present invention, the first active material layer may contain a binder content greater than the second active material layer.

According to one or more embodiments of the present invention, the active material layer may include a negative electrode active material.

A method for manufacturing an electrode for a secondary battery according to one or more embodiments of the present invention may include forming a primer layer on one or more of a first surface of a current collector facing a first direction and a second surface of the current collector facing a second direction opposite to the first direction, forming one or more protrusions by protruding one or more portions of the current collector with the primer layer formed on one or more of the first and second surfaces thereof in at least one of the first direction or the second direction, and forming an active material layer on the primer layer having the one or more protrusions.

According to one or more embodiments of the present invention, the forming of the one or more protrusions may include forming one or more first protrusions by protruding one or more portions of the current collector with the primer layer formed on one or more of the first and second surfaces thereof in the first direction, and forming one or more second protrusions by protruding another one or more portions of the current collector with the primer layer formed on one or more of the first and second surfaces thereof in the second direction.

According to one or more embodiments of the present invention, the one or more first protrusions and the one or more second protrusions may be alternately arranged in a direction perpendicular to the first and second directions.

According to one or more embodiments of the present invention, a spacing between one or more of the one or more first protrusions and one or more of the one or more second protrusions, which are alternately arranged, may be within a specified range.

According to one or more embodiments of the present invention, the forming of the one or more protrusions may include forming an opening penetrating the current collector and the primer layer for one or more of the one or more protrusions.

According to one or more embodiments of the present invention, the forming of the active material layer may include forming a first active material layer placed on the primer layer, and forming a second active material layer placed on the first active material layer.

A secondary battery according to one or more embodiments of the present invention may include an electrode assembly including a first electrode, a second electrode, and a separator placed between the first electrode and the second electrode, and a case that accommodates the electrode assembly. Further, at least one of the first electrode or the second electrode includes a current collector having a first surface facing a first direction and a second surface facing a second direction opposite to the first direction, a primer layer placed on one or more of the first surface and the second surface of the current collector, and an active material layer placed on the primer layer. Further, one or more portions of the current collector with the primer layer formed on one or more of the first and second surfaces thereof are protruded in at least one of the first direction or the second direction to form one or more protrusions.

According to one or more embodiments of the present invention, the one or more protrusions may include one or more first protrusions formed to protrude in the first direction, and one or more second protrusions formed to protrude in the second direction.

According to one or more embodiments of the present invention, the one or more first protrusions and the one or more second protrusions may be alternately arranged in a direction perpendicular to the first and second directions.

According to one or more embodiments of the present invention, a spacing between one or more of the one or more first protrusions and one or more of the one or more second protrusions, which are alternately arranged, may be within a specified range

According to one or more embodiments of the present invention, one or more of the one or more protrusions may include an opening penetrating the current collector and the primer layer.

According to one or more embodiments of the present invention, the active material layer may include a first active material layer placed on the primer layer, and a second active material layer placed on the first active material layer.

However, the technical problem to be solved by the present invention is not limited to the above problem, and other problems not mentioned herein, and aspects and features of the present invention that would address such problems, will be clearly understood by those skilled in the art from the description of the present invention below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 illustrates an example of a secondary battery according to one embodiment of the present invention.
FIG. 2 illustrates an example of an electrode for a secondary battery including a 3D-structured current collector according to one embodiment of the present invention.
FIG. 3 illustrates an example of an electrode for a secondary battery, in which multiple active material layers are formed on a 3D-structured current collector, according to one embodiment of the present invention.
FIG. 4 illustrates an example of an electrode for a secondary battery including a 3D-structured current collector including openings according to one embodiment of the present invention.
FIG. 5 illustrates an example of an electrode for a secondary battery, in which multiple active material layers are formed on a 3D-structured current collector including openings, according to one embodiment of the present invention.
FIG. 6 illustrates an example of an electrode for a secondary battery, in which multiple protrusions are formed in opposite directions of a current collector, according to one embodiment of the present invention.
FIG. 7 illustrates an example of a protrusion height, a protrusion pitch, and a protrusion angle of a 3D-structured current collector according to one embodiment of the present invention.
FIG. 8 illustrates a method for manufacturing an electrode for a secondary battery according to one embodiment of the present invention.
FIG. 9 illustrates a process for coating a primer layer according to one embodiment of the present invention.
FIG. 10 illustrates embossing and punching processes for forming protrusions and openings on a current collector coated with a primer layer according to one embodiment of the present invention.
FIG. 11 illustrates alternative embossing and punching processes for forming protrusions and openings on a current collector coated with a primer layer according to one embodiment of the present invention.
FIG. 12 illustrates an embossing process for forming protrusions on a current collector coated with a primer layer according to one embodiment of the present invention.
FIG. 13 illustrates a coating process of an active material layer according to one embodiment of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

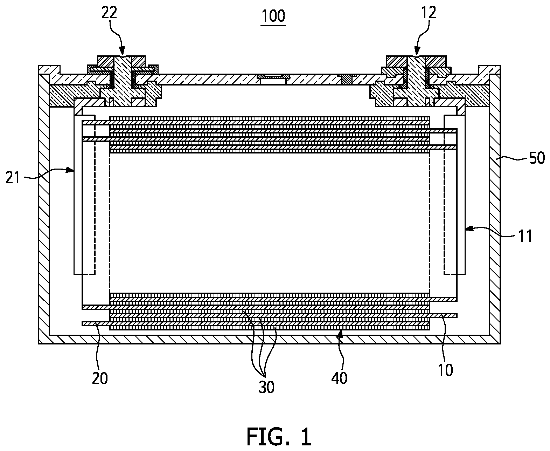

FIG. 1 illustrates an example of a secondary battery according to one embodiment of the present invention. As shown in FIG. 1, a secondary battery 100 may include an electrode assembly 40, a first current collector 11, a first terminal 12, a second current collector 21, a second terminal 22, a case 50, and a cap assembly.

The electrode assembly 40 may be formed by stacking a laminate including a first electrode 10, a separator 30, and a second electrode 20, each of which is formed in a thin plate or a film. For instance, the electrode assembly 40 may be a stack type, but the shape of the electrode assembly 40 of the present invention is not limited thereto. According to various embodiments, the electrode assembly 40 may be of a winding type. In the embodiment where the electrode assembly 40 is a wound laminate, a winding axis may be parallel to a longitudinal direction of the case 50. Further, the electrode assembly 40 may be a Z-stack electrode assembly in which the first electrode 10 and the second electrode 20 are provided on opposite sides of a separator 30 bent into a Z-shaped stack. In some embodiments, one or more electrode assemblies 40 may be stacked and accommodated in the case 50 such that the long sides thereof are adjacent to each other, but the number of electrode assemblies 40 of the present invention is not limited thereto. In the electrode assembly 40, the first electrode 10 may serve as a negative electrode, and the second electrode 20 may serve as a positive electrode. In some embodiments, the roles can be reversed. For example, the first electrode 10 may serve as the positive electrode, while the second electrode 20 may serve as the negative electrode. FIG. 1 illustrates that the case 50 has a prismatic shape, but the scope of the present invention is not limited thereto. For instance, the case 50 of the secondary battery 100 of the present invention may configured in any shape, such as a cylindrical shape, a prismatic shape, a pouch shape, a coin shape, or the like.

The first electrode 10 may include a first current collector, a first primer layer disposed or placed on at least one surface of the first current collector, and a first active material layer disposed or placed on the first primer layer. A first electrode tab (or a first uncoated portion) of the first electrode 10 on which the first active material layer is not disposed or placed may serve as a current pathway between the first electrode 10 and the first current collector 11. In some examples, the first electrode tab may be formed by cutting the first electrode 10 in advance so that the first electrode tab protrudes from one side when the first electrode 10 is fabricated, and may extend further out than the separator 30 without requiring additional cutting. In one embodiment, at least a portion of the first current collector on which the first primer layer is disposed or placed may protrude in a direction perpendicular to a plane of the first current collector to form at least one protrusion. For example, the first current collector, on the surface of which the first primer layer is formed, may be formed in a 3D structure that includes protrusions.

The second electrode 20 may include a second current collector, a second primer layer disposed or placed on at least one surface of the second current collector, and a second active material layer disposed or placed on the second primer layer. A second electrode tab (or a second uncoated portion) of the second electrode 20 on which the second active material layer is not disposed or placed may serve as a current pathway between the second electrode 20 and the second current collector 21. In some examples, the second electrode tab may be formed by cutting the second electrode 20 in advance so that the second electrode tab protrudes from the other side when the second electrode 20 is fabricated, and may extend further out than the separator 30 without requiring additional cutting. In one embodiment, at least a portion of the second current collector on which the second primer layer is disposed or placed may be protrude in a direction perpendicular to a plane of the second current collector to form at least one protrusion. For example, the second current collector, on the surface of which the second primer layer is formed, may be formed in a 3D structure that includes protrusions.

In some examples, the first electrode tab may be positioned on one side of the electrode assembly 40 while the second electrode tab may be positioned on the other side of the electrode assembly 40. In some embodiments, both of the first electrode tab and the second electrode tab may be positioned on the same side of the electrode assembly 40.

The first electrode tab of the first electrode 10 and the second electrode tab of the second electrode 20 are positioned respectively at the opposite ends of the electrode assembly 40, respectively. In some examples, the electrode assembly 40 may be accommodated in the case 40 together with the electrolyte. In some embodiments, the first current collector 11 and the second current collector 21 may be welded and connected to the first electrode tab of the first electrode 10 and the second electrode tab of the second electrode 20, respectively, which are exposed on the opposite sides of the electrode assembly 40.

The case 50 may form the overall exterior of the secondary battery 100 and provide a space in which the electrode assembly 40 is accommodated. The case 50 may also include a cap assembly.

The cap assembly may include a cap plate that covers an opening of the case 50, and both of the case 50 and the cap plate may be made of conductive materials. In some embodiments, the first terminal 12 and the second terminal 22, which are electrically connected to the first electrode 10 or the second electrode (20), may be installed to protrude outward through the cap plate. In this configuration, the first terminal 12 may be electrically connected to the first current collector 11, which is joined to the first electrode tab, and the second terminal 22 may be electrically connected to the second current collector 21, which is joined to the second electrode tab.

In one embodiment, a plurality of the secondary batteries 100 may be stacked to form a battery pack. This battery pack may be used in any device that uses high capacity and high output power. For example, the battery pack may be used in laptops, smartphones, electric vehicles, and other similar applications.

The secondary battery 100 may be a lithium secondary battery, a sodium secondary battery, or the like. However, the scope of the present invention is not limited thereto, and the secondary battery 100 may include any battery capable of repeatedly providing electricity through charging and discharging. In one embodiment, in a case where the secondary battery 100 is the lithium secondary battery, it may be used in electric vehicles (EVs) due to its prolonged lifespan and high-rate capability. For example, the secondary battery 100 may be used in hybrid vehicles such as plug-in hybrid electric vehicles (PHEVs). In some embodiments, the lithium secondary battery can be used in fields requiring large-scale power storage. For instance, the secondary battery 100 may be used in electric bicycles, power tools, and similar applications.

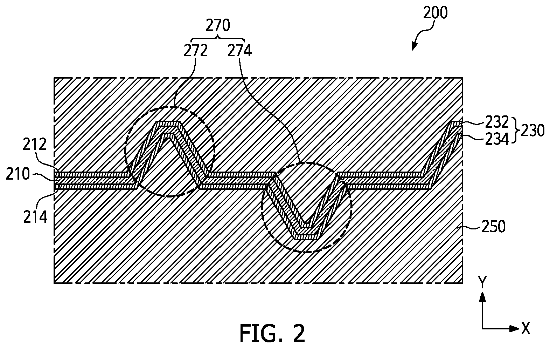

FIG. 2 illustrates an example of an electrode for a secondary battery including a 3D-structured current collector according to one embodiment of the present invention. Referring to FIG. 2, an electrode 200 for a secondary battery (e.g., the first electrode 10 and/or the second electrode 20 shown in FIG. 1) may include a current collector 210 including a first surface 212 facing a first direction (e.g. a front direction, that is, a positive Y-axis direction) and a second surface 214 facing a second direction (e.g., a rear direction, that is, a negative Y-axis direction) opposite to the first direction, a primer layer 230 disposed or placed on one or more (e.g., each) of the first surface 212 and the second surface 214 of the current collector 210, and an active material layer 250 disposed or placed on the primer layer 230.

The current collector 210 may be a metal plate (e.g., a thin metal plate) that supports the electrode 200 and serves to transfer electrons from an external source to the active material or transfer electrons from the active material to the external source to allow electrochemical reactions to occur during the charging and discharging of the secondary battery (e.g., the secondary battery 100 shown in FIG. 1).

The primer layer 230 may be coated on the surface of the current collector 210 and serve to improve the interfacial adhesion when coating the active material slurry. For example, the primer layer 230 may enhance the adhesive strength to prevent or reduce the possibility of the active material layer 250 from being separated from the substrate. The primer layer 230 disposed or placed on the first surface 212 of the current collector 210 may be referred to as a first primer layer 232, and the primer layer 230 disposed or placed on the second surface 214 of the current collector 210 may be referred to as a second primer layer 234.

In one embodiment, the primer layer 230 may be formed from a carbon-based material and may further include a binder. In some embodiments, the primer layer 230 may be formed with a thickness ranging from, for example, approximately 0.1 µm to approximately 1 µm. The primer layer 230 may be applied to at least one surface of the current collector 210 through a wet coating method or a dry coating method.

In one embodiment, one or more portions of the current collector 210 with the primer layers 230 disposed or placed thereon may protrude in at least one of the first direction or the second direction to form one or more protrusions 270. For example, the one or more protrusions 270 may include one or more first protrusions 272 each formed to protrude in the first direction, and one or more second protrusions 274 each formed to protrude in the second direction. The one or more protrusions 270 may increase a contact area with the active material slurry, to enhance adhesion while reducing the electrical resistance. This structure may be effective in maintaining the interfacial adhesion even when a high-capacity active material, which may undergo significant expansion and contraction during the charging and discharging of the secondary battery, is used. For example, in the case of an electrode plate, such as a thick electrode plate, the electrical resistance may increase as a distance from a surface of the electrode plate to the current collector 210 increases. In some embodiments, by forming the current collector 210 with the primer layers 230 into a 3D structure (a structure with one or more protrusions 270), the average distance from the surface of the electrode plate to the current collector 210 may be reduced, to reduce the electrical resistance. In some embodiments, forming the current collector 210 with the primer layers 230 into the 3D structure increases the amount of current collector 210 included per unit area in the electrode plate, to reduce the electrical resistance. The one or more protrusions 270 may be formed using a mold.

In one embodiment, the one or more first protrusions 272 and the one or more second protrusions 274 may be alternately arranged in a direction (an X-axis direction) perpendicular to both of the first direction and the second direction. For example, when viewed from one surface (e.g., the first surface 212) of the current collector 210, a protruding portion (e.g., the first protrusion 272) and a recessed portion (e.g., the second protrusion 274) may be alternately arranged. In some embodiments, the spacing between the alternately arranged one or more first protrusions 272 and one or more second protrusions 274 may fall within a specified range. For instance, the pitch between the protrusions 270 may be within a specified range, which indicates that the intervals between the protrusions may be consistent or may be spaced apart with allowable tolerance distances within a specified range.

The active material layer 250 may include active materials that chemically react within the electrode 200 of the secondary battery to generate electrical energy. For example, the active materials may exchange charges during the charging and discharging processes in the secondary battery and may include a positive electrode active material used in the positive electrode and a negative electrode active material used in the negative electrode. In some embodiments, the active material layer 250 may further include a binder and/or a conductive agent. This active material layer 250 may be formed on the primer layer 230 through a wet coating method or a dry coating method.

In some embodiments, forming the current collector 210 with the primer layers 230 into the 3D structure can reduce or prevent the structural deformation of the electrode caused by delamination of the mixture layers, even when applying the negative electrode active material. In some embodiments, this approach reduces the electron transfer resistance across the electrode plate (e.g., the entire electrode plate) and mitigates the unevenness of overvoltage. Generally, in the case of the negative electrode, an aqueous binder such as styrene-butadiene rubber (SBR) may be used. However, the SBR may have a relatively lower adhesion compared to a non-aqueous binder, poly(vinylidene fluoride) (PVDF), which may be used for the positive electrode. This may present challenges in coating the 3D-structured current collector 210. To address this issue, by forming the current collector 210 into the 3D structure together with the primer layers 230 that enhance interfacial adhesion when coating the active material slurry, the advantages of the 3D structure may be obtained while addressing the adhesion issues even when applying the negative electrode active material.

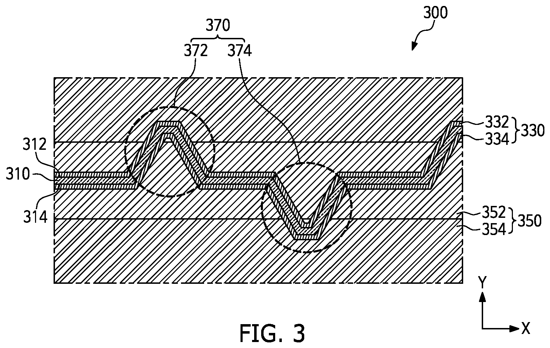

FIG. 3 illustrates an example of an electrode for a secondary battery, in which multiple active material layers are formed on a 3D-structured current collector, according to one embodiment of the present invention. An electrode 300 for a secondary battery shown in FIG. 3 has a similar structure to the electrode 200 shown in FIG. 2 except that the active material layer disposed or placed on one surface of the current collector may have a multilayer structure. Accordingly, configurations that are the same or similar to the configurations described in FIG. 2 will be omitted in the following description.

Referring to FIG. 3, the electrode 300 for the secondary battery (e.g., the first electrode 10 and/or the second electrode 20 shown in FIG. 1) may include a current collector 310 including a first surface 312 facing the first direction (the positive Y-axis direction) and a second surface 314 facing the second direction (the negative Y-axis direction) opposite to the first direction. The electrode 300 may further include a primer layer 330 disposed or placed on one or more (e.g., each) of the first surface 312 and the second surface 314 of the current collector 310, and an active material layer 350 disposed or placed on the primer layer 330.

The primer layer 330 disposed or placed on the first surface 312 of the current collector 310 may be referred to as a first primer layer 332, and the primer layer 330 disposed or placed on the second surface 314 of the current collector 310 may be referred to as a second primer layer 334.

In one embodiment, one or more portions of the current collector 310 with the primer layers 330 disposed or placed thereon may protrude in at least one of the first direction or the second direction to form one or more protrusions 370. For example, the one or more protrusions 370 may include one or more first protrusions 372 each formed to protrude in the first direction, and one or more second protrusions 374 each formed to protrude in the second direction. The one or more protrusions 370 may be formed using a mold.

In one embodiment, the one or more first protrusions 372 and the one or more second protrusions 374 may be alternately arranged in the direction (the X-axis direction) perpendicular to the first and second directions. In some embodiments, the spacing between the alternately arranged one or more first protrusions 372 and one or more second protrusions 374 may fall within a specified range.

In one embodiment, the active material layer 350 may be formed in a multilayer structure. For example, the active material layer 350 may include a first active material layer 352 disposed or placed on the primer layer 330, and a second active material layer 354 disposed or placed on the first active material layer 352. In another example, as shown in FIG. 3, the first active material layer 352 may not completely cover the primer layer 330, leaving at least a portion of the primer layer 330 exposed, with the second active material layer 354 disposed or placed on that exposed portion. In one embodiment, the first active material layer 352 may have a binder content greater than the second active material layer 354.

In some embodiments, by forming the active material layer 350 with the multilayer structure on the primer layer 330, materials with swelling properties (e.g., substantially large swelling properties) may be placed onto the current collector 310. Such an embodiment may allow for the application of high-capacity active materials that undergo substantial expansion and contraction through an internal stress dispersion effect.

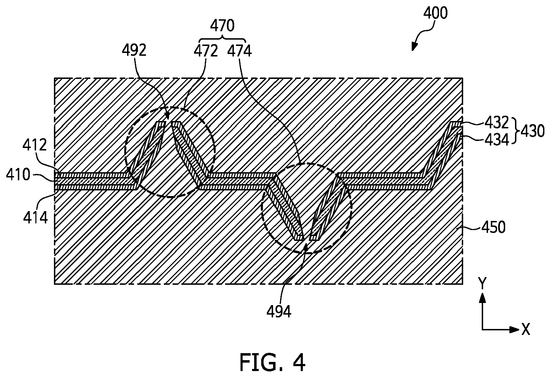

FIG. 4 illustrates an example of an electrode for a secondary battery including a 3D-structured current collector including openings according to one embodiment of the present invention. An electrode 400 for a secondary battery shown in FIG. 4 has a similar structure to the electrode 200 shown in FIG. 2 except that one or more (e.g., each) of the one or more protrusions may have an opening. Accordingly, configurations that are the same or similar to the configurations described in FIG. 2 will be omitted in the following description.

Referring to FIG. 4, the electrode 400 for the secondary battery (e.g., the first electrode 10 and/or the second electrode 20 shown in FIG. 1) may include a current collector 410 including a first surface 412 facing the first direction (the positive Y-axis direction) and a second surface 414 facing the second direction (the negative Y-axis direction) opposite to the first direction. The electrode 400 may further include a primer layer 430 disposed or placed on one or more (e.g., each) of the first surface 412 and the second surface 414 of the current collector 410, and an active material layer 450 disposed or placed on the primer layer 430.

The primer layer 430 disposed or placed on the first surface 412 of the current collector 410 may be referred to as a first primer layer 432, and the primer layer 430 disposed or placed on the second surface 414 of the current collector 410 may be referred to as a second primer layer 434.

In one embodiment, one or more portions of the current collector 410 with the primer layers 430 disposed or placed thereon may protrude in at least one of the first direction or the second direction to form one or more protrusions 470. For example, the one or more protrusions 470 may include one or more first protrusions 472 each formed to protrude in the first direction, and one or more second protrusions 474 each formed to protrude in the second direction. The one or more protrusions 470 may be formed using a mold.

In one embodiment, the one or more first protrusions 472 and the one or more second protrusions 474 may be alternately arranged in the direction (the X-axis direction) perpendicular to the first and second directions. In some embodiments, the spacing between the alternately arranged one or more first protrusions 472 and one or more second protrusions 474 may fall within a specified range.

In one embodiment, one or more (e.g., each) of the one or more protrusions 470 may include an opening that passes through the current collector 410 and the primer layer 430. For example, one or more (e.g., each) of the one or more first protrusions 472 may include a first opening 492 that penetrates the current collector 410 and the primer layer 430, and one or more (e.g., each) of the one or more second protrusions 474 may include a second opening 494 that similarly penetrates the current collector 410 and the primer layer 430. These openings 492 and 494 may be formed using a mold. For instance, when the one or more protrusions 470 is formed through the molding, the openings 492 and 494 may be formed concurrently or simultaneously.

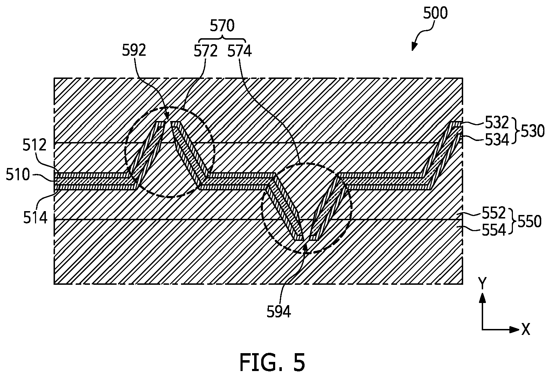

FIG. 5 illustrates an example of an electrode for a secondary battery, in which multiple active material layers are formed on a 3D-structured current collector including openings, according to one embodiment of the present invention. An electrode 500 for a secondary battery shown in Fig. 5 has a similar structure to the electrode 300 shown in FIG. 3 except that one or more (e.g., each) of the one or more protrusions may have an opening. Accordingly, configurations that are the same or similar to the configurations described in FIG. 3 will be omitted in the following description.

Referring to FIG. 5, the electrode 500 for the secondary battery (e.g., the first electrode 10 and/or the second electrode 20 shown in FIG. 1) may include a current collector 510 including a first surface 512 facing the first direction (the positive Y-axis direction) and a second surface 514 facing the second direction (the negative Y-axis direction) opposite to the first direction. The electrode 500 may further include a primer layer 530 disposed or placed on one or more (e.g., each) of the first surface 512 and the second surface 514 of the current collector 410, and an active material layer 550 disposed or placed on the primer layer 530.

The primer layer 530 disposed or placed on the first surface 512 of the current collector 510 may be referred to as a first primer layer 532, and the primer layer 530 disposed or placed on the second surface 514 of the current collector 510 may be referred to as a second primer layer 534.

In one embodiment, one or more portions of the current collector 510 with the primer layers 530 disposed or placed thereon may protrude in at least one of the first direction or the second direction to form one or more protrusions 570. For example, the one or more protrusions 570 may include one or more first protrusions 572 each formed to protrude in the first direction, and one or more second protrusions 574 each formed to protrude in the second direction. The one or more protrusions 570 may be formed using a mold.

In one embodiment, the one or more first protrusions 572 and the one or more second protrusions 574 may be alternately arranged in the direction (the X-axis direction) perpendicular to the first and second directions. In some embodiments, the spacing between the alternately arranged one or more first protrusions 572 and one or more second protrusions 574 may fall within a specified range.

In one embodiment, one or more (e.g., each) of the one or more protrusions 570 may include an opening that passes through the current collector 510 and the primer layer 530. For example, one or more (e.g., each) of the one or more first protrusions 572 may include a first opening 592 that penetrates the current collector 510 and the primer layer 530, and one or more (e.g., each) of the one or more second protrusions 574 may include a second opening 594 that similarly penetrates the current collector 510 and the primer layer 530. These openings 592 and 594 may be formed using a mold. For instance, when the one or more protrusions 570 is formed through the molding, the openings 592 and 594 may be formed simultaneously or concurrently.

In one embodiment, the active material layer 550 may be formed in a multilayer structure. For example, the active material layer 550 may include a first active material layer 552 disposed or placed on the primer layer 530, and a second active material layer 554 disposed or placed on the first active material layer 552. In another example, as shown in FIG. 5, the first active material layer 552 may not completely cover the primer layer 530, leaving at least a portion of the primer layer 530 exposed, with the second active material layer 554 disposed or placed on that exposed portion. In one embodiment, the first active material layer 552 may have a binder content greater than the second active material layer 554.

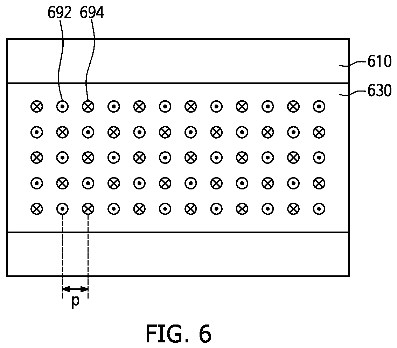

FIG. 6 illustrates an example of an electrode for a secondary battery, in which multiple protrusions are formed in opposite directions of a current collector, according to one embodiment of the present invention. Referring to Fig. 6, an electrode for a secondary battery (e.g., the first electrode 10 and/or the second electrode 20 shown in FIG. 1, the electrode 200 shown in FIG. 2, the electrode 300 shown in FIG. 3, the electrode 400 shown in FIG. 4, or the electrode 500 shown in FIG. 5) may include a current collector 610 and a primer layer 630 disposed or placed on at least one surface of the current collector 610.

In one embodiment, one or more portions of the current collector 610 with the primer layers 630 disposed or placed thereon may protrude to form one or more protrusions (e.g., protrusions 692 and 694). For example, the one or more protrusions may include one or more first protrusions 692 each formed to protrude in one direction of the current collector 610 (e.g., a first direction perpendicular to the plane of the current collector 610), and one or more second protrusions 694 formed to protrude in the other direction of the current collector 610 (e.g., a second direction perpendicular to the plane of the current collector 610 and opposite to the first direction). In FIG. 6, when viewed from one surface of the current collector 610, one or more (e.g., each) of the one or more first protrusions 692 are formed in a protruding shape while one or more (e.g., each) of the one or more at least one second protrusion 694 are formed in a recessed shape.

In one embodiment, the one or more first protrusions 692 and the one or more second protrusions 694 may be arranged alternately in a horizontal direction (e.g., a longitudinal direction of the current collector 610) perpendicular to the protruding direction (e.g., a thickness direction of the current collector 610). In addition, the spacing or the pitch p between one or more (e.g., each) of the one or more first protrusions 692 and one or more (e.g., each) of the one or more second protrusions 694, which are alternately arranged, may fall within a specified range.

In one embodiment, by alternating directions in which the protrusions 692 and 694 protrude, the 3D structure of the current collector 610 on which the primer layers 630 are formed may have symmetry. According to this embodiment, the average distance from the opposite surfaces of the electrode plate to the current collector 610 becomes uniformly reduced, to maintain uniformity in the electrical characteristics of the electrode.

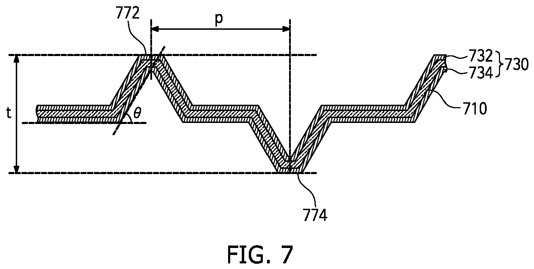

FIG. 7 illustrates an example of a protrusion height, a protrusion pitch, and a protrusion angle of a 3D-structured current collector according to one embodiment of the present invention. Referring to FIG. 7, an electrode for a secondary battery (e.g., the first electrode 10 and/or the second electrode 20 shown in FIG. 1, the electrode 200 shown in FIG. 2, the electrode 300 shown in FIG. 3, the electrode 400 shown in FIG. 4, or the electrode 500 shown in FIG. 5) may include a current collector 710 and a primer layer 730 disposed or placed on at least one surface of the current collector 710. For example, a first primer layer 732 may be disposed or placed on one surface of the current collector 710, and a second primer layer 734 may be disposed or placed on the opposite surface of the current collector 710.

In one embodiment, one or more portions of the current collector 710 with the primer layers 730 disposed or placed thereon may protrude to form one or more protrusions (e.g., protrusions 772 and 774). For example, the one or more protrusions may include one or more first protrusions 772 each formed to protrude in one direction from the current collector 710, and one or more second protrusions 774 each formed to protrude in the opposite direction from the current collector 710.

In one embodiment, the one or more first protrusions 772 and the one or more second protrusions 774 may be alternately arranged in a horizontal direction (e.g., a longitudinal direction of the current collector 710) perpendicular to the protruding direction (e.g., a thickness direction of the current collector 710). According to this embodiment, a protrusion pitch p between one or more (e.g., each) of the one or more first protrusions 772 and one or more (e.g., each) of the one or more second protrusions 774, which are alternately arranged, may fall within a specified range. For instance, the protrusion pitch p between the protrusions 772 and 774 may be consistent or may be spaced apart with allowable tolerance distances within a specified range. Moreover, a protrusion length (or a protrusion height) t between one or more (e.g., each) of the one or more first protrusions 772 and one or more (e.g., each) of the one or more second protrusions 774 may also fall within a specified range. In a case where the protrusion height t between one or more (e.g., each) of the one or more first protrusions 772 and one or more (e.g., each) of the one or more second protrusions 774 is too small (e.g., smaller than a minimum height), the increase in contact area with the active material slurry may be insignificant, which may result in a decrease in adhesive strength and a decrease in the effect of reducing the electrical resistance. On the other hand, in a case where the protrusion height t between one or more (e.g., each) of the one or more first protrusion 772 and one or more (e.g., each) of the one or more second protrusion 774 is too large (e.g., larger than a maximum height), adhesion with the active material slurry may become difficult. In some embodiments, a protrusion angle θ for one or more (e.g., each) of one or more protrusions 772 and 774 may also fall within a specified range. In a case where the protrusion angle θ of one or more (e.g., each) of the one or more protrusions 772 and 774 is too small (e.g., smaller than a minimum angle), it may be difficult to obtain the protrusion height (t) greater than a specified value. On the other hand, in a case where the protrusion angle θ of one or more (e.g., each) of the one or more protrusions 772 and 774 is too large (e.g., larger than a maximum angle), adhesion with the active material slurry may become difficult due to a steep slope.

In one embodiment, where the protrusion pitch p between each of the one or more first protrusion 772 and each of the one or more second protrusion 774 is 100 µm, the protrusion height t is 50 µm, and the protrusion angle (θ) is 1.12 rad, the contact area with the active material slurry may be increased by approximately 2.1 times compared to a structure in which no protrusions 772 and 774 are formed on the current collector 710 where the primer layers 730 are disposed or placed.

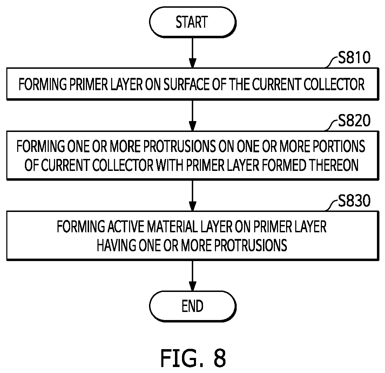

FIG. 8 illustrates a method for manufacturing an electrode for a secondary battery according to one embodiment of the present invention. Referring to FIG. 8, according to the method for manufacturing the electrode for the secondary battery (e.g., the first electrode 10 and/or the second electrode 20 shown in FIG. 1, the electrode 200 shown in FIG. 2, the electrode 300 shown in FIG. 3, the electrode 400 shown in FIG. 4, or the electrode 500 shown in FIG. 5), a primer layer may be formed on at least one surface of the current collector in act S810. For example, a first primer layer may be formed on a first surface of the current collector facing a first direction, and a second primer layer may be formed on a second surface of the current collector facing a second direction, which is the opposite direction of the first direction.

In act S820, one or more protrusions may be formed on one or more portions of the current collector with the primer layer(s) formed thereon. For example, one or more portions of the current collector with the primer layer formed on one surface thereof may be protruded in a first direction to form one or more first protrusions. In some embodiments, another one or more portions of the current collector with the primer layer formed on the other surface thereof may be protruded in a second direction to form one or more second protrusions.

In one embodiment, the one or more first protrusions and the one or more second protrusions may be formed to be disposed or placed alternately in a direction perpendicular to the first and second directions. For example, when viewed from one surface of the current collector, the protruding portions (e.g., the first protrusions) and the recessed portions (e.g., the second protrusions) may be arranged alternately. In some embodiments, the spacing between one or more (e.g., each) of the one or more first protrusions and one or more (e.g., each) of the one or more second protrusions, which are alternately arranged, may fall within a specified range. For instance, the protrusions may be arranged at consistent intervals, or the protrusions may be spaced apart with allowable tolerance distances within a specified range.

In one embodiment, one or more (e.g., each) of the one or more protrusions may include an opening that penetrates both the current collector and the primer layer. For example, one or more (e.g., each) of the one or more first protrusions may include a first opening that penetrates the current collector and the primer layer, and one or more (e.g., each) of the one or more second protrusions may include a second opening that penetrates the current collector and the primer layer

In act S830, an active material layer may be formed on the primer layer having the one or more protrusions. For example, a slurry for an active material may be applied onto the primer layer that includes one or more protrusions.

In one embodiment, an active material layer may be formed in a multilayer structure on the primer layer having the one or more protrusions. For example, a first active material layer may be formed on the primer layer, and a second active material layer may be formed on the first active material layer. In another example, the first active material layer may not completely cover the primer layer, and the second active material layer may be disposed or placed to cover at least a portion of the primer layer that is not covered by the first active material layer. In one embodiment, the first active material layer may have a binder content greater than the second active material layer.

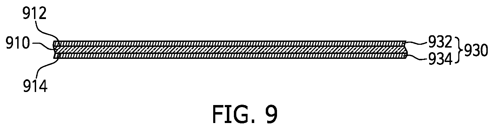

Referring now to FIGS. 9 to 13, acts of the method for manufacturing the electrode for the secondary battery will be described in more detail.

FIG. 9 illustrates a process for coating a primer layer according to one embodiment of the present invention. Referring to FIG. 9, a primer layer 930 may be formed on at least one surface of a flat current collector 910. For example, a first primer layer 932 may be coated on a first surface 912 of the current collector 910 oriented in the first direction while a second primer layer 934 may be coated on a second surface 914 of the current collector 910 oriented in a second direction opposite to the first direction. The primer layer 930 may be coated on at least one surface of the current collector 910 to serve to enhance interface adhesion during the coating of the active material slurry.

In one embodiment, the primer layer 930 may be formed from a carbon-based material and may further include a binder. In some embodiments, the primer layer 930 may be uniformly and thinly formed. For example, the primer layer 930 may be formed with a thickness ranging from approximately 0.1 µm to approximately 1 µm. Furthermore, the primer layer 930 may be applied to at least one surface of the current collector 910 through a wet coating method or a dry coating method.

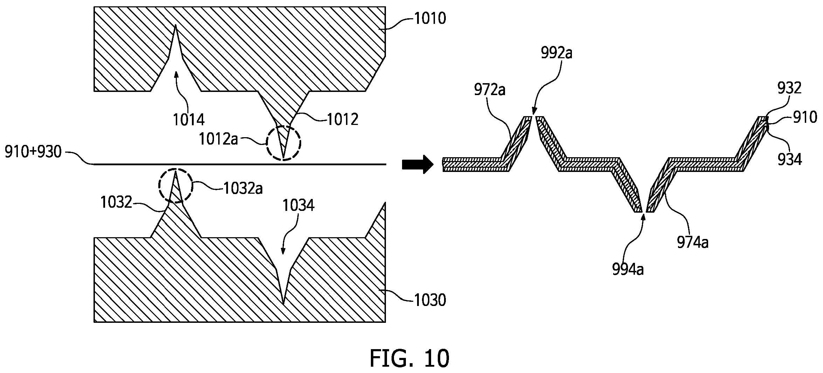

FIG. 10 illustrates embossing and punching processes for forming protrusions and openings on a current collector coated with a primer layer according to one embodiment of the present invention. The embossing and punching processes described with reference to FIG. 10 may be performed after the coating process of the primer layer described with reference to FIG. 9.

Referring to FIG. 10, one or more portions of the current collector 910 with the primer layers 930 disposed or placed thereon may protrude in at least one of a first direction or a second direction to form one or more protrusions (e.g., protrusions 972a and 974a). For example, one or more portions of the current collector 910 with the primer layers 930 disposed or placed thereon may be protruded in the first direction to form one or more first protrusions 972a, and different one or more portions of the current collector 910 with the primer layer 930 formed thereon may be protruded in the second direction to form one or more second protrusions 974a. The one or more protrusions 972a and 974a may increase the contact area with the active material slurry, to enhance adhesion while reducing the electrical resistance, and may be effective in maintaining the interfacial adhesion even when a high-capacity active material, which undergo significant expansion and contraction during the charging and discharging of the secondary battery, is used.

In one embodiment, the one or more first protrusions 972a and the one or more second protrusions 974a may be formed to be disposed or placed alternately in a direction perpendicular to the first and second directions. In some embodiments, the spacing between one or more (e.g., each) of the one or more first protrusions 972a and one or more (e.g., each) of the one or more second protrusions 974a, which are alternately arranged, may fall within a specified range.

In one embodiment, one or more (e.g., each) of the one or more protrusions (e.g., protrusions 972a and 974a) may include an opening (an opening 992a or 994a) that penetrates both the current collector 910 and the primer layer 930. For example, one or more (e.g., each) of the one or more first protrusions 972a may include a first opening 992a that penetrates the current collector 910 and the primer layer 930, and one or more (e.g., each) of the one or more second protrusions 974a may include a second opening 994a that penetrates the current collector 910 and the primer layer 930.

The process of forming the one or more protrusions 972a and 974a (embossing process) and the process of forming the one or more openings 992a and 994a at the one or more protrusions 972a and 974a (punching process), which are described above, may be carried out using molds 1010 and 1030. The molds 1010 and 1030 may include an upper mold 1010 having a first protrusion 1012 and a first recess 1014 that are disposed or placed in a direction perpendicular to an upward direction (or a downward direction) of the current collector 910 with the primer layers 930 formed thereon, and a lower mold 1030 having a second protrusion 1032 and a second recess 1034 are disposed or placed in a direction perpendicular to the downward direction (or the upward direction) of the current collector 910 with the primer layers 930 formed thereon. According to this embodiment, when the upper mold 1010 and the lower mold 1030 are joined (or fitted), the first protrusion 1012 and the second recess 1034, as well as the second protrusion 1032 and the first recess 1014, which are located at corresponding positions may have corresponding shapes and sizes. Thus, when the upper mold 1010 and the lower mold 1030 are joined (or fitted), the first protrusion 1012 of the upper mold 1010 can press a portion of the current collector 910 with the primer layer 930 into the second recess 1034 of the lower mold 1030 to form a protrusion, and the second protrusion 1032 of the lower mold 1030 can press another portion of the current collector 910 with the primer layer 930 into the first recess 1014 of the upper mold 1010 to form another protrusion. Such mutual joining and mold opening of the upper mold 1010 and the lower mold 1030 may be performed repeatedly in succession.

In one embodiment, one or more (e.g., each) of a tip end 1012a of the first protrusion 1012 and a tip end 1032a of the second protrusion 1032 may be formed in a conical shape. In some embodiments, based on the shapes and protrusion heights of the tip end 1012a of the first protrusion 1012 and the tip end 1032a of the second protrusion 1032, an opening 992a or 994a penetrating through the current collector 910 and the primer layer 930 may be formed in one or more (e.g., each) of one or more protrusions. In this case, the tip end 1012a of the first protrusion 1012 and the tip end 1032a of the second protrusion 1032 may serve as a punching element.

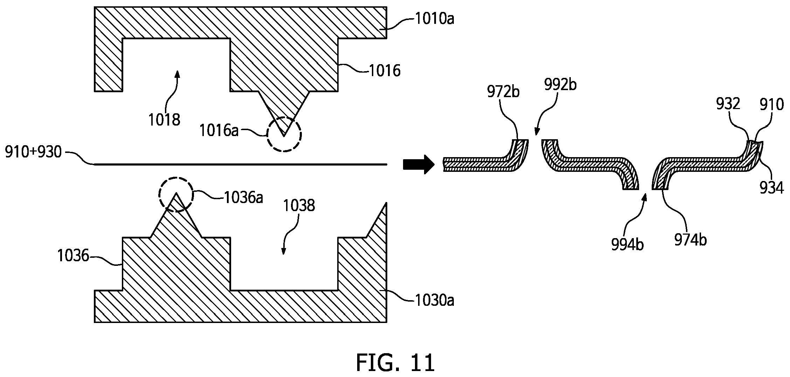

FIG. 11 illustrates embossing and punching processes for forming protrusions and openings on a current collector coated with a primer layer according to one embodiment of the present invention. The embossing and punching processes described with reference to FIG. 11 may be performed after the coating process of the primer layer described with reference to FIG. 9. In FIG. 11, configurations that are the same or similar to the configurations described in FIG. 10 will be omitted in the following description.

Referring now to FIG. 11, the process of forming one or more protrusions 972b and 974b at one or more portions of the current collector 910 with the primer layers 930 formed thereon (embossing process), and the process of forming one or more openings 992b and 994b at the one or more protrusions 972b and 974b (punching process) may be carried out using molds 1010a and 1030a. Compared to the molds 1010 and 1030 described in FIG. 10, the molds 1010a and 1030b described in FIG. 11 may have different shapes and sizes for a first protrusion 1016, a first recess 1018, a second protrusion 1036, and a second recess 1038. When the upper mold 1010a and the lower mold 1030a shown in FIG. 11 are joined (or fitted), the first protrusion 1016 and the second recess 1038, as well as the second protrusion 1036 and the first recess 1018, which are located at corresponding positions may not have corresponding shapes and sizes. For example, the first recess 1018 may include a clearance space to prevent or reduce the possibility of a tip end 1036a of the second protrusion 1036 from colliding with the facing mold (the upper mold 1010a), and similarly, the second recess 1038 may include a clearance space to prevent or reduce the possibility of a tip end 1016a of the first protrusion 1016 from colliding with the facing mold (the lower mold 1030a). Accordingly, when the upper mold 1010a and the lower mold 1030a are joined (or fitted), the first protrusion 1016 of the upper mold 1010a may press a portion of the current collector 910 with the primer layer 930 into the second recess 1038 of the lower mold 1030a to form the protrusion 974b and the opening 994b. Similarly, the second protrusion 1036 of the lower mold 1030a may press another portion of the current collector 910 with the primer layer 930 into the first recess 1018 of the upper mold 1010a to form the protrusion 972b and the opening 992b. In some embodiments, when the tip end 1016a of the first protrusion 1016 and the tip end 1036a of the second protrusion 1036 press and penetrate the current collector 910 with the primer layers 930 formed thereon, the current collector 910 with the primer layers 930 may be bent, causing the protrusions 972b and 974b to have a curved shape at the surfaces contacted by the tip ends 1016a and 1036a of the first protrusion 1016 and the second protrusion 1036. In one embodiment, the tip end 1016a of the first protrusion 1016 and the tip end 1036a of the second protrusion 1036 may be formed in a conical shape.

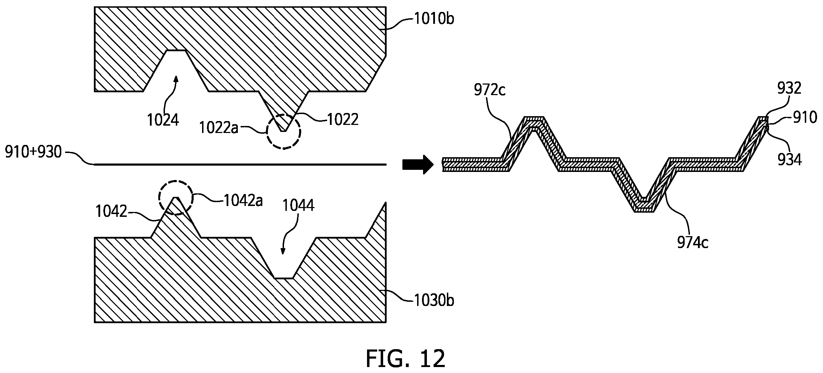

FIG. 12 illustrates an embossing process for forming protrusions on a current collector coated with a primer layer according to one embodiment of the present invention. The embossing process described with reference to FIG. 12 may be performed after the coating process of the primer layer described with reference to FIG. 9. In FIG. 12, configurations that are the same or similar to the configurations described in FIG. 10 will be omitted in the following description.

Referring to FIG. 12, the process of forming one or more protrusions 972c and 974c at one or more portions of the current collector 910 with the primer layers 930 formed thereon (embossing process) may be carried out using molds 1010b and 1030b. Compared to the molds 1010 and 1030 described in FIG. 10, the molds 1010b and 1030b described in FIG. 12 may have different shapes and sizes for a first protrusion 1022, a first recess 1024, a second protrusion 1042, and a second recess 1044. In FIG. 12, a tip end 1022a of the first protrusion 1022 and a tip 1042a of the second protrusion 1042 may be configured to be flat or hemispherical. In this manner, because the tip end 1022a of the first protrusion 1022 and the tip 1042a of the second protrusion 1042 are formed in a blunt shape, only one or more protrusions 972c and 974c may be formed at one or more portions of the current collector 910 with the primer layers 930 formed thereon, and no opening may be formed. In some embodiments, when the upper mold 1010b and the lower mold 1030b are joined (or fitted), the first protrusion 1022 and the second recess 1044, as well as the second protrusion 1042 and the first recess 1024, which are located at corresponding positions may have corresponding shapes and sizes.

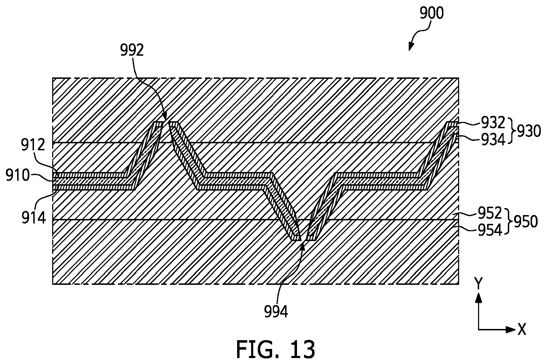

FIG. 13 illustrates a coating process of an active material layer according to one embodiment of the present invention. The coating process of the active material layer described with reference to FIG. 13 may be performed after the embossing and punching processes described with reference to FIGS. 10 to 12.

Referring to FIG. 13, an active material layer 950 may be formed on the primer layers 930 and the current collector 910 where one or more protrusions (and one or more openings 992 and 994) are formed. The active material layer 950 may include active materials that chemically react within an electrode 900 of a secondary battery to generate electrical energy. For example, the active materials may exchange charges during the charging and discharging processes in the secondary battery and may include a positive electrode active material used in the positive electrode and a negative electrode active material used in the negative electrode. In some embodiments, the active material layer 950 may further include a binder and/or a conductive agent. This active material layer 950 may be formed on the primer layer 930 through a wet coating method or a dry coating method.

In one embodiment, an active material layer 950 may be formed in a multilayer structure on the primer layer 930 having the one or more protrusions (and the one or more openings 992 and 994). For example, a first active material layer 952 may be formed on the primer layer 930, and a second active material layer 954 may be formed on the first active material layer 952. In another example, the first active material layer 952 may not completely cover the primer layer 930, and the second active material layer 954 may be formed to cover at least a portion of the primer layer 930 that is not covered by the first active material layer 952. In one embodiment, the first active material layer 952 may have a binder content greater than the second active material layer 954.

The above-described coating process of the active material layer 950 may be carried out using a slot die coater. The slot die coater may include at least one discharge port, and an active material slurry discharged through the at least one discharge port may be applied onto the current collector 910 on which the primer layers 930 are formed. For example, the slot die coater may apply an active material slurry discharged through at least one discharge port onto the primer layer 930 having one or more protrusions (and the one or more openings 992 and 994). In another example, the slot die coater may apply a first active material slurry discharged through a first discharge port onto the primer layer 930 having one or more protrusions (and the one or more openings 992 and 994), and the slot die coater may apply a second active material slurry discharged through a second discharge port onto the first active material layer 952 formed by the first active material slurry. In this case, the first active material layer 952 may be formed by the first active material slurry and the second active material layer 954 may be formed by the second active material slurry. Thereafter, a rolling process may be performed.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of 90 wt% to 99.5 wt%, preferably 92 wt% to 99.0 wt% on the basis of 100 wt% of the positive electrode active material layer, and the content of the binder and the conductive material is in a range of 0.5 wt% to 5 wt%, preferably 1.5 wt% to 4 wt%respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include 90 wt % to 99 wt % of a negative electrode active material, 0.5 wt % to 5 wt % of a binder, and 0 wt % to 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

According to embodiments of the present invention, by forming the primer layer on the surface of the current collector and forming one or more protrusions at one or more portions of the primer-coated current collector, the structural deformation of the electrode caused by delamination of the mixture layers can be reduced or prevented. This may also reduce the electron transfer resistance across the electrode plate (e.g., the entire electrode plate) and mitigate the uneven distribution of overvoltage.

According to embodiments of the present invention, by forming the active material layer with the multilayer structure on the primer layer, materials with swelling properties (e.g., substantially large swelling properties) may be placed onto the current collector. Such embodiments may allow for the application of high-capacity active materials that undergo substantial expansion and contraction through an internal stress dispersion effect.

However, the aspects and features of the present invention are not limited to those described above, and other aspects and features not expressly described herein will be clearly understood by a person skilled in the art from the description of example embodiments of the present invention described below.

Although the present invention has been described with reference to embodiments and drawings illustrating aspects thereof, the present invention is not limited thereto. Various modifications and variations can be made by a person skilled in the art to which the present invention belongs within the scope of the present invention and the claims and their equivalents, below.

### DESCRIPTION OF SOME REFERENCE SYMBOLS

| | | | |
|---|---|---|---|
| 100: | secondary battery | 10: | first electrode |
| 20 : | second electrode | 30: | separator |
| 40 : | electrode assembly | 50: | case |

## Claims

1. An electrode (10, 20, 200, 300, 400, 500, 900) for a secondary battery (100), the electrode (10, 20, 200, 300, 400, 500, 900) comprising:
a current collector (210, 310, 410, 510, 610, 710, 910) comprising a first surface (212, 312, 412, 512, 912) facing a first direction and a second surface (214, 314, **414,** 514, 914) facing a second direction opposite to the first direction;
a primer layer (230, 330, 430, 530, 630, 730, 930) placed on one or more of the first surface (212, 312, 412, 512, 912) and the second surface (214, 314, **414,** 514, 914) of the current collector (210, 310, 410, 510, 610, 710, 910); and
an active material layer (250, 350, 450, 550, 950) placed on the primer layer (230, 330, 430, 530, 630, 730, 930),
wherein one or more portions of the current collector (210, 310, 410, 510, 610, 710, 910) with the primer layer (230, 330, 430, 530, 630, 730, 930) formed on one or more of the first and second surfaces (214, 314, 414, 514, 914) thereof are protruded in at least one of the first direction or the second direction to form one or more protrusions (270, 370, 470, 570, 692, 694, 772, 774, 972a, 974a, 972b, 974b, 972c, 974c).

2. The electrode (10, 20, 200, 300, 400, 500, 900) as claimed in claim 1, wherein the one or more protrusions (270, 370, 470, 570, 972c, 974c) comprises:
one or more first protrusions (272, 372, 472, 572, 692, 772, 972a) formed to protrude in the first direction; and
one or more second protrusions (274, 374, 474, 574, 694, 774, 974a) formed to protrude in the second direction.

3. The electrode (10, 20, 200, 300, 400, 500, 900) as claimed in claim 2, wherein the one or more first protrusions (272, 372, 472, 572, 692, 772, 972a) and the one or more second protrusions (274, 374, 474, 574, 694, 774, 974a) are alternately arranged in a direction perpendicular to the first and second directions.

4. The electrode (10, 20, 200, 300, 400, 500, 900) as claimed in claim 3, wherein a spacing between one or more of the one or more first protrusions (272, 372, 472, 572, 692, 772, 972a) and one or more of the one or more second protrusions (274, 374, 474, 574, 694, 774, 974a), which are alternately arranged, is within a specified range.

5. The electrode (400, 500, 900) as claimed in any of claims 1 to 3, wherein one or more of the one or more protrusions (470, 570, 972c, 974c) comprises an opening (492, 494, 592, 594, 992a, 992b, 994a, 994b) penetrating the current collector (410, 510, 610, 710, 910) and the primer layer (430, 530, 630, 730, 930).

6. The electrode (300, 500, 900) as claimed in any of claims 1 to 3, wherein the active material layer (350, 450, 550, 950) comprises:
a first active material layer (352, 552, 952) placed on the primer layer (330, 430, 530, 630 930); and
a second active material layer (354, 554, 954) placed on the first active material layer (352, 552, 952).

7. The electrode (300, 500, 900) as claimed in claim 6, wherein the first active material layer (352, 552, 952) contains a binder content greater than the second active material layer (354, 554, 954).

8. The electrode (10, 20, 200, 300, 400, 500, 900) as claimed in any of claims 1 to 7, wherein the active material layer (250, 350, 450, 550, 950) comprises a negative electrode active material.

9. A method for manufacturing an electrode (10, 20, 200, 300, 400, 500, 900) for a secondary battery (100), the method comprising:
forming a primer layer (230, 330, 430, 530, 630, 730, 930) on one or more of a first surface (212, 312, 412, 512, 912) of a current collector (210, 310, 410, 510, 610, 710, 910) facing a first direction and a second surface (214, 314, 414, 514, 914) of the current collector (210, 310, 410, 510, 610, 710, 910) facing a second direction opposite to the first direction;
forming one or more protrusions (270, 370, 470, 570, 692, 694, 772, 774, 972a, 974a, 972b, 974b, 972c, 974c) by protruding one or more portions of the current collector (210, 310, 410, 510, 610, 710, 910) with the primer layer (230, 330, 430, 530, 630, 730, 930) formed on one or more of the first and second surfaces thereof in at least one of the first direction or the second direction; and
forming an active material layer (250, 350, 450, 550, 950) on the primer layer (230, 330, 430, 530, 630, 730, 930) having the one or more protrusions (270, 370, 470, 570, 692, 694, 772, 774, 972a, 974a, 972b, 974b, 972c, 974c).

10. The method as claimed in claim 9, wherein the forming of the one or more protrusions (270, 370, 470, 570, 972c, 974c) comprises:
forming one or more first protrusions (272, 372, 472, 572, 692, 772, 972a) by protruding one or more portions of the current collector (210, 310, 410, 510, 610, 710, 910) with the primer layer (230, 330, 430, 530, 630, 730, 930) formed on one or more of the first and second surfaces thereof in the first direction; and
forming one or more second protrusions (374, 474, 574, 774, 974a) by protruding another one or more portions of the current collector (210, 310, 410, 510, 610, 710, 910) with the primer layer (230, 330, 430, 530, 630, 730, 930) formed on one or more of the first and second surfaces thereof in the second direction.

11. The method as claimed in claim 10, wherein the one or more first protrusions (272, 372, 472, 572, 692, 772, 972a) and the one or more second protrusions (274, 374, 474, 574, 694, 774, 974a) are alternately arranged in a direction perpendicular to the first and second directions.

12. The method as claimed in claim 11, wherein a spacing between one or more of the one or more first protrusions (272, 372, 472, 572, 692, 772, 972a) and one or more of the one or more second protrusions (274, 374, 474, 574, 694, 774, 974a), which are alternately arranged, is within a specified range.

13. The method as claimed in any of claims 9 to 12, wherein the forming of the one or more protrusions (270, 370, 470, 570, 972c, 974c) comprises forming an opening (492, 494, 592, 594, 992a, 992b, 994a, 994b) penetrating the current collector (210, 310, 410, 510, 610, 710, 910) and the primer layer (230, 330, 430, 530, 630, 730, 930) for one or more of the one or more protrusions (270, 370, 470, 570, 972c, 974c).

14. The method as claimed in any of claims 9 to 13, wherein the forming of the active material layer (250, 350, 450, 550, 950) comprises:
forming a first active material layer (352, 552, 952) placed on the primer layer (230, 330, 430, 530, 630, 730, 930); and
forming a second active material layer (354, 554, 954) placed on the first active material layer (352, 552, 952).

15. A secondary battery (100) comprising:
an electrode assembly (40) comprising a first electrode (10), a second electrode (20), and a separator (30) placed between the first electrode (10) and the second electrode (20); and
a case (50) that accommodates the electrode assembly (40),
wherein at least one of the first electrode (10) or the second electrode (20) comprises:
a current collector (210, 310, 410, 510, 610, 710, 910) comprising a first surface (212, 312, 412, 512, 912) facing a first direction and a second surface (214, 314, 414, 514, 914) facing a second direction opposite to the first direction;
a primer layer (230, 330, 430, 530, 630, 730, 930) placed on one or more of the first surface (212, 312, 412, 512, 912) and the second surface (214, 314, 414, 514, 914) of the current collector (210, 310, 410, 510, 610, 710, 910); and
an active material layer (250, 350, 450, 550, 950) placed on the primer layer (230, 330, 430, 530, 630, 730, 930), and
wherein one or more portions of the current collector (210, 310, 410, 510, 610, 710, 910) with the primer layer (230, 330, 430, 530, 630, 730, 930) formed on one or more of the first and second surfaces (214, 314, 414, 514, 914) thereof are protruded in at least one of the first direction or the second direction to form one or more protrusions (270, 370, 470, 570, 692, 694, 772, 774, 972a, 974a, 972b, 974b, 972c, 974c).
